# EUROPEAN PATENT SPECIFICATION

(11) **EP 1 577 584 B1**
(45) Date of publication and mention of the grant of the patent: **16.07.2014**
(21) Application number: 05005754.6
(22) Date of filing: 16.03.2005
(51) Int. Cl.: F16H 7/06

(54) **Power transmission device, method for assembling the same, and vehicle**
Kraftantriebsvorrichtung und Methode seiner Herstellung und Fahrzeug
Dispositif de transmission de force et méthode pour l'assembler et voiture munie du dispositif

(30) Priority: 16.03.2004 JP 2004075419
(43) Date of publication of application: 21.09.2005
(73) Proprietor: Yamaha Hatsudoki Kabushiki Kaisha, Iwata-shi, Shizuoka-ken (JP)
(72) Inventor: Yoshihide, Takano, c/o Yamaha Hatsudoki K.K., Iwata-shi Shizuoka-ken (JP)
(74) Representative: Grünecker, Kinkeldey, Stockmair & Schwanhäusser

(56) References cited:
- EP-A- 0 952 074
- EP-A- 1 172 289
- JP-A- 2001 171 367
- JP-A- 2001 173 742
- US-B1- 6 216 659
- US-B1- 6 364 797
- YAMAHA: "YAMAHA, 2000, Zuma II (Scooters), parts fiche : CRANKCASE (image)" INTERNET ARTICLE, [Online] 8 February 2008 (2008-02-08), XP002468163 Retrieved from the Internet: URL:http://www.ronniesmailorder.com/fiche_ section_detail.asp> [retrieved on 2008-02-08]
- YAMAHA: "Yamaha, 2001, Road Star (Motorcycles), parts fiche: MIDDLE DRIVE GEAR (image)" INTERNET ARTICLE, [Online] 8 February 2008 (2008-02-08), XP002468164 Retrieved from the Internet: URL:http://www.ronniesmailorder.com/fiche_ section_detail.asp> [retrieved on 2008-02-08]

## Description

The invention relates to a power transmission device according to the preamble of independent claim 1. Further, the invention relates to a straddle-type vehicle comprising a power transmission device for transmitting a drive power from a power source, in particular being an internal combustion engine, to a driving device, in particular being a rear wheel. Moreover, the invention relates to a method for assembling a power transmission device according to the preamble of independent claim 9.

A conventional power transmission device as it is applied to a motorcycle, e.g. is disclosed in JP 2000-130254 A. Upon operation of an internal combustion engine, the power thereof is transmitted to the rear wheel by the power transmission device through the drive shaft, the drive wheel, a driven wheel and the like, with the speed reduced. The motorcycle thus can travel.

The power transmission device is assembled in, for example, a method as follows.

That is, first, in a first assembly process, the drive side transmission case is assembled. Specifically, for example, the drive shaft is assembled with the drive side transmission case. On the other hand, in a second assembly process, the drive wheel is temporarily placed onto the driven side transmission case, and the endless member is wound around the drive wheel and the driven wheel.

Further, in a third assembly process, the driven side transmission case is mounted onto the drive side transmission case, and the drive wheel is mounted onto the one end of the drive shaft. Next, the cover member is mounted onto the driven side transmission case to complete the assembly processes of the power transmission device.

As thus described, according to the method for assembling the power transmission device in the conventional art, the drive wheel is mounted onto the one end of the drive shaft in the third assembly process. The drive wheel has been temporarily placed onto the driven side transmission case in the second assembly process. Because of this temporary setting, the drive wheel may unintentionally drop off from the driven side transmission case in the third assembly process. The method thus can make the assembly processes of the power transmission device troublesome. The method is not preferable, accordingly.

Another power transmission device is known from JP 2001-173742 A which forms the preamble of the independent claims.

Accordingly, in view of the above-mentioned circumstances, it is an object of the invention to provide an improved power transmission device being more easy to assemble. It is further an object of the invention to provide a method which facilitates the assembly and formation of a power transmission device. Moreover, it is an object of the invention to provide a vehicle, preferably a motorcycle, being more effective to manufacture.

For a power transmission device of the above kind, the above object is solved in an inventive manner by elements featuring independent claim 1. Said device includes a drive shaft journaled by a drive side transmission case with one end of the drive shaft extending beyond the drive side transmission case, a drive wheel mounted onto the one end of the drive shaft, a driven side transmission case mounted onto the drive side transmission case, wherein a regulating member mounted onto the driven side transmission case is positioned to approach an outside surface of the drive wheel from a location outward of the one end in an axial direction of the drive shaft, wherein the regulating member prevents the drive wheel from dropping off the drive shaft when a fastener for affixing the drive wheel to the one end of the drive shaft is not yet installed and wherein the regulating member and a cover member are individually in surface abutment with the driven side transmission case.

Preferably, the power transmission device further comprises a driven wheel journaled by the driven side transmission case to be interlockingly coupled with the drive wheel, and a cover member preferably covers the one end of the drive shaft, the drive wheel, and/or the driven wheel from a location outside thereof, the cover member being mounted onto the driven side transmission case.

Further, the regulating member and a cover member are individually in surface abutment with the driven side transmission case, and respective surfaces of the driven side transmission case abutting on the regulating member and the cover member are defined in one theoretical flat plane or surface.

Furthermore, preferably the power transmission device comprises an endless member wound around the drive wheel and a driven wheel for power transmission therebetween, wherein the regulating member is preferably positioned to approach an outside surface of the endless member from a location outward of the one end in the axial direction of the drive shaft.

Still further, preferably a portion of the regulating member opposing to an outside surface of the drive wheel is disposed in an area surrounded by an annular endless member in a view along an axis of the drive shaft.

Moreover, preferably the power transmission device comprises an oil pump configured to supply a lubricant to a portion to be lubricated, wherein preferably the oil pump includes a pump case, at least part thereof being unitarily formed with the regulating member and having a pump chamber therein, and a pump drive section positioned in the pump chamber and interlockingly coupled with the side of the driven wheel.

Also, preferably the pump case includes a pump case body preferably being mounted onto the driven side transmission case and a pump cover detachably affixed to the pump case body, and the pump chamber is formed between the pump case body and the pump cover.

Besides, for a vehicle of the above kind, the object is solved in an inventive manner in that the power transmission device is configured according to at least one of the claims 1 to 7.

Since the vehicle can be provided with such a power transmission device, the assembling thereof is further facilitated and can be performed more effectively.

Moreover, for a method for assembling the power transmission device, the above object is solved in an inventive manner by a first step wherein a drive side transmission case is assembled including a drive shaft, a second step of mounting a regulating member onto a driven side transmission case that journals a driven wheel, wherein a drive wheel is positioned so as to be interposed between the driven side transmission case and the regulating member in an axial direction of a drive shaft of the drive wheel; a third step of mounting the driven side transmission case onto a drive side transmission case and mounting the drive wheel onto one end of the drive shaft; and mounting a cover member onto the driven side transmission case.

Accordingly, with such a method, the power transmission device can be assembled more effectively.

Preferably, the method comprises a further step of assembling the power transmission means to a frame of a machine, in particular a straddle-type vehicle, such as preferably a motorcycle.

Further preferred embodiments of the invention are subject to the respective subclaims.

In the following, the invention will be described in greater detail by means of a preferred embodiment thereof with reference to the attached drawings, wherein:
- Fig. 1: is a cross-sectional view taken along the line 1-1 of Fig. 3;
- Fig. 2: is a side view of a motorcycle;
- Fig. 3: is a cross-sectional view that enlarges a portion of Fig. 2;
- Fig. 4: is a cross-sectional view taken along the line 4-4 of Fig. 3;
- Fig. 5: is a developed view of a portion of Fig. 1; and
- Fig. 6: is a developed view of another portion of Fig. 1.

In order to describe the present invention more in detail, an embodiment thereof is described with reference to the accompanying figures.

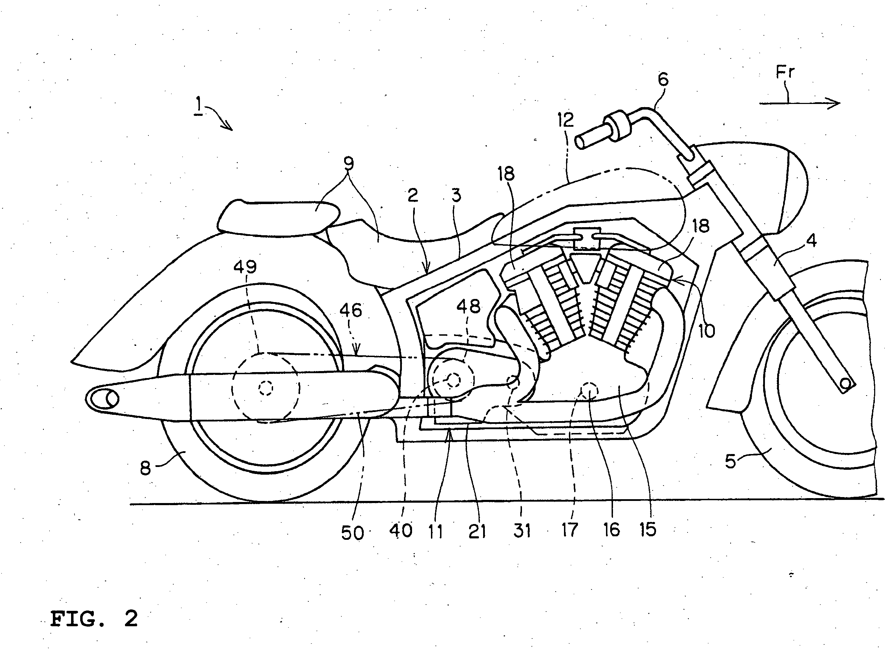

In Fig. 2, the reference numeral 1 indicates a straddle type vehicle, and more specifically a motorcycle as an embodiment of the invention. Also, the reference symbol Fr indicates a forward direction of the vehicle 1 into which the vehicle 1 travels.

A vehicle body 2 of the vehicle 1 includes a body frame 3, a front fork 4 steerably supported by the body frame 3 at its front end, a front wheel 5 supported by the front fork 4 at its bottom end, handlebars 6 supported by the front fork 4 at its top end, a rear arm pivotally supported by the body frame 3 at its end portion, a rear wheel 8 supported by the rear arm at its pivotal end, a seat 9 supported by the body frame 3 on its upper side, an internal combustion engine 10 supported by the body frame 3 to be a motive power source of the vehicle 1, a power transmission device 11 interlockingly connecting the rear wheel 8 with the engine 10, and a fuel tank 12 for containing fuel to be supplied to the engine 10.

The engine 10 is a four stroke engine of overhead valve (OHV) type. The engine 10 includes a crankcase 15 supported by the body frame 3, a crankshaft 17 having an axis 16 extending transversely of the vehicle 1 and journaled by the crankcase 15 for rotation about the axis 16, and front and rear cylinders 18, 18 extending upward from the crankshaft 17.

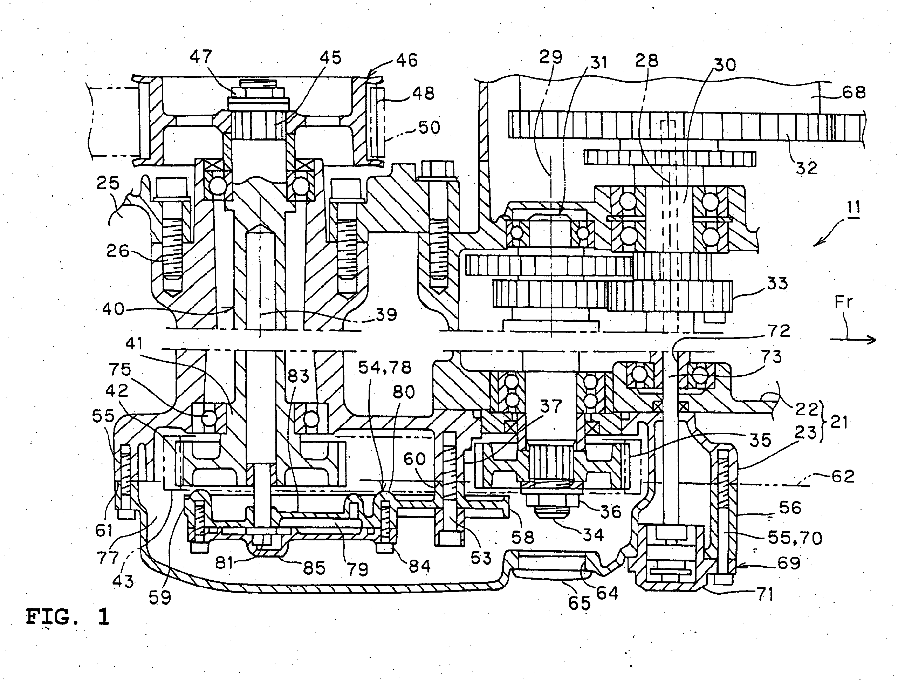

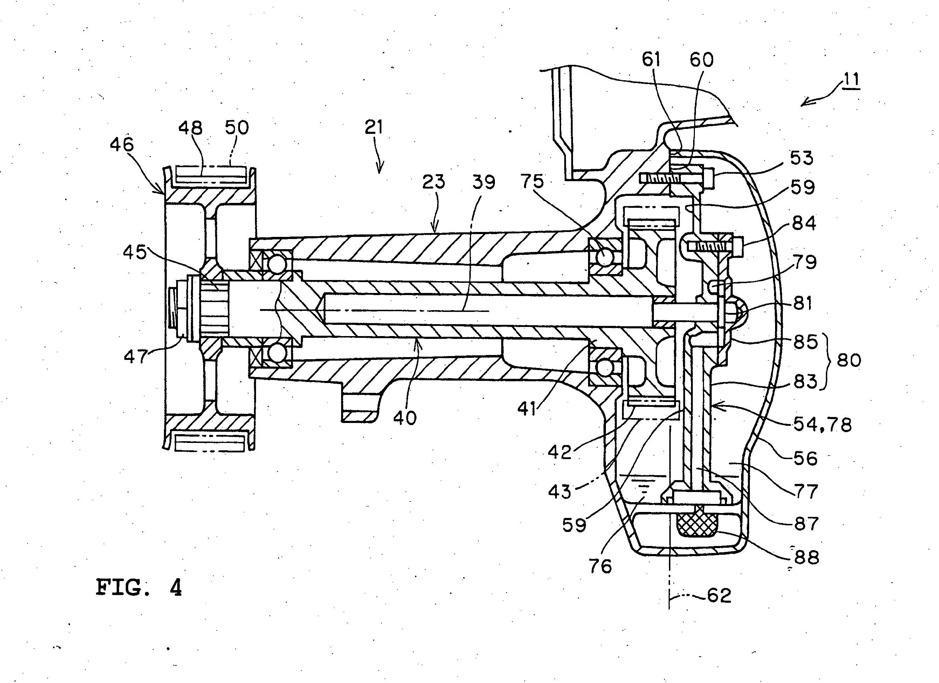

With reference to Figs. 1-4, the power transmission device 11 includes a transmission case 21 that is made of aluminum cast material and is supported by the body frame 3. The transmission case 21 includes a drive side transmission case 22 that is unitarily formed with a rear portion of the crankcase 15 and a driven side transmission case 22 that is mounted onto a rear portion of the drive side transmission case 22. One side portion of the driven side transmission case 23 is detachably affixed to one side portion (right hand side) of the drive side transmission case 22 by fasteners 24, while the other side of the driven side transmission case 23 is detachably affixed to the other side portion (left hand side) of the drive side transmission case 22 by a bracket 25 and fasteners 26. In this manner, the driven side transmission case 23 is mounted onto the rear portion of the drive side transmission case 22.

The drive side transmission case 22 journals an input shaft 30 and a drive shaft 31 as an output shaft such that the shafts 30, 31 are rotatable about axes 28, 29, respectively, that extend parallel to the axis 16 of the crankshaft 17. A drive side gear unit 32 interlockingly couples the input shaft 30 with the crankshaft 17, while a transmission gear unit 33 interlockingly couples the drive shaft 31 with the input shaft 30.

One end 34 of the drive shaft 31 extends beyond one end (right hand side) of the drive side transmission case 22, and also extends through a front portion of the driven side transmission case 23 to be out of the front portion of the driven side transmission case 23. The one end 34 of the drive shaft 31 carries a drive wheel 35 removably coupled therewith by means of a spline connection on the axis 29. In addition, a fastener 36 disposed on the axis 29 detachably fixes the drive wheel 35 to the one end 34.

The rear portion of the driven side transmission case 23 journals a driven shaft 40 such that the driven shaft 40 is rotatable about an axis 39 that extends parallel to the axis 16 of the crankshaft 17. One end 41 of the driven shaft 40 extends beyond one end of the rear portion of the driven side transmission case 23. A driven wheel 42 is unitarily formed with the one end 41 on the axis 39 to be positioned in the rear of the drive wheel 35. The drive wheel 35 and the driven wheel 42 are sprocket wheels. An endless member 43 as a power transmission chain is wound around the wheels 35, 42. The endless member 43 interlockingly couples the driven wheel 42 with the drive wheel 35 such that the driven wheel 42 rotates in a slower speed than the drive wheel 35.

An outside surface of the driven side transmission case 23 has a recess 37. The drive wheel 35 and a portion of the endless member 43 that is wound around the drive wheel 35 are removably fitted into the recess 37 from a location outward of the one end 34 in the axial direction of the drive shaft 31. The drive wheel 35 and the portion of the endless member 43 are individually positioned adjacent to an outside surface of the driven side transmission case 23 that defines a bottom surface of the recess 37, in the axial direction of the drive shaft 31. Also, respective outer peripheral areas of the drive wheel 35 and the portion of the endless member 43 are positioned adjacent to an inner surface of the recess 37 around the axis 29. That is, the drive wheel 35 and the portion of the endless member 43 are fitted into the recess 37 such that their respective movements in radial directions are regulated.

The rear wheel 8 is coupled with the other end 45 of the driven shaft 40 through an interlocking device 46. The interlocking device 46 includes a drive sprocket wheel 48 detachably fixed to the other end 45 of the driven shaft 40 by a fastener 47, a driven sprocket wheel 49 affixed to the rear wheel 8, and an endless chain 50 wound around the drive and driven sprocket wheels 48, 49 for power transmission.

A regulating member 54 is provided, which is made of aluminum cast material and positioned to approach at least a portion of an outside surface of the drive wheel 35 and at least a portion of an outside surface of the endless member 43 from a location outward of the one end 34 in the axial direction of the drive shaft 31. The regulating member 54 is detachably mounted onto the driven side transmission case 23 by a fastener 53. A cover member 56 is also provided, which is made of aluminum cast material and covers the one end 34 of the drive shaft 31, the drive wheel 35, the driven wheel 42 and the regulating member 54 from a location outward of the one end 34 of the drive shaft 31. The cover member 56 is detachably mounted onto the driven side transmission case 23 by a fastener 55.

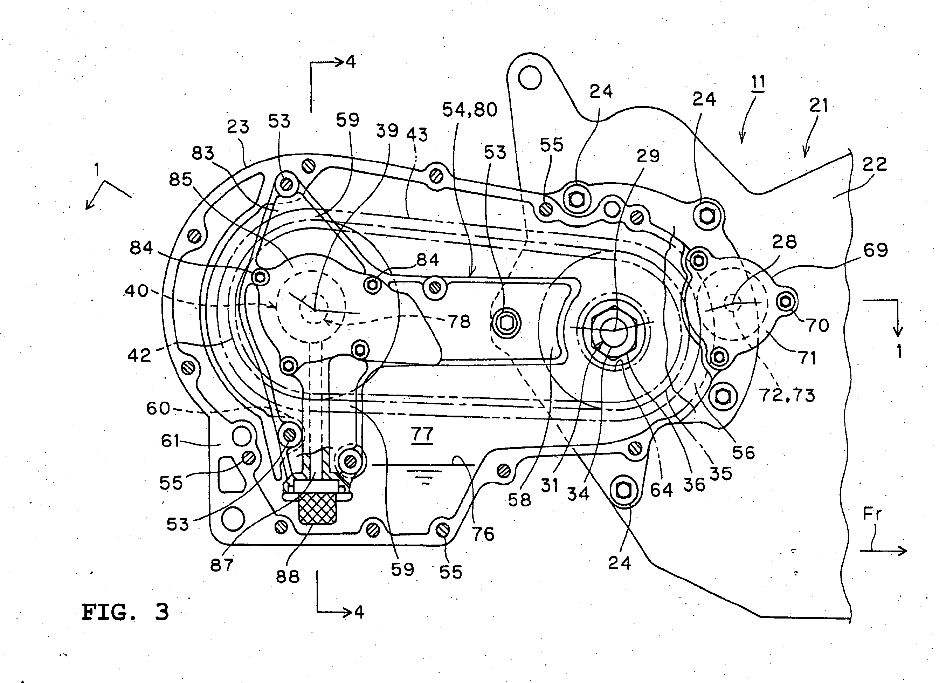

In addition, one portion 58 of the regulating member 54 directly opposes to at least a portion of the outside surface of the drive wheel 35 from a location outward of the one end 34 of the drive shaft 31, while another portion 59 of the regulating member 54 directly opposes to at least a portion of the outside surface of the endless member 43. That is, the drive wheel 35 and the endless member 43 are interposed between the driven side transmission case 23 and the regulating member 54 such that movements thereof are regulated in the axial direction of the drive shaft 31. Also, in a view along the axis 29 of the drive shaft 31 (Fig. 3), at least a portion 58 of the regulating member 54 is positioned in an area surrounded by the endless member 43 that has an annular shape.

The regulating member 54 and the cover member 56 are individually in surface abutment with the outside surface of the driven side transmission case 23. Respective surfaces 60, 61 of the driven side transmission case 23 abutting on the regulating member 54 and the cover member 56 are defined in one hypothetical flat surface 62. A portion of the cover member 56 on the axis 29 of the drive shaft 31 has an oil inlet port 64 through which lubricant oil can be introduced. A cap 65 made of resin detachably closes the oil inlet port 64. Additionally, the oil inlet port 64 preferably allows a nut of the fastener 36 to pass therethrough. Another construction in which the nut cannot pass therethrough is also applicable.

A clutch 68 is provided to transmit or not to transmit the power from the crankshaft 17 to the input shaft 30 of the power transmission device 11. Operating means 69 is provided to connect or disconnect the clutch 68. The operating means 69 includes an actuator 71 detachably affixed to the front portion of the cover member 56 by a fastener 70, and an operating rod 73 fitted into an aperture 72 that is defined on the axis 28 of the input shaft 30 so as to be slidable in the axial direction to interlockingly couple the clutch 68 with the actuator 71. The clutch 68 is connected or disconnected when the actuator 71 is indirectly operated through the operating rod 73 by the rider.

A lubrication device is provided to supply lubricant 76 to a portion to be lubricated 75 such as a bearing portion that journals the driven shaft 40 on the driven side transmission case 23. The lubrication device includes an oil pump 78 that can supply the lubricant 76 accumulating in a bottom of a closed space 77 between the driven side transmission case 23 and the cover member 56 to each portion to be lubricated 75. The oil pump 78 includes a pump case 80 unitarily formed with the regulating member 54 to define a pump chamber 79 inside thereof, and a pump drive section 81 which is a rotor built in the pump chamber 79 and interlockingly coupled with the driven shaft 40 on the driven wheel 42 side.

The pump case 80 includes a pump case body 83 mounted onto the driven side transmission case 23 by the fastener 53, and a pump cover 85 detachably affixed to a surface of the pump case body 83 on the cover member 56 side by a fastener 84. The pump chamber 79 is defined between the pump case body 83 and the pump cover 85. The pump case 80 defines an oil passage 87 that connects the bottom of the space 77 and the pump chamber 79 with each other. An oil filter 88 is attached to a bottom opening of the oil passage 87. The oil filter 88 is supported by both the driven side transmission case 23 and the cover member 56.

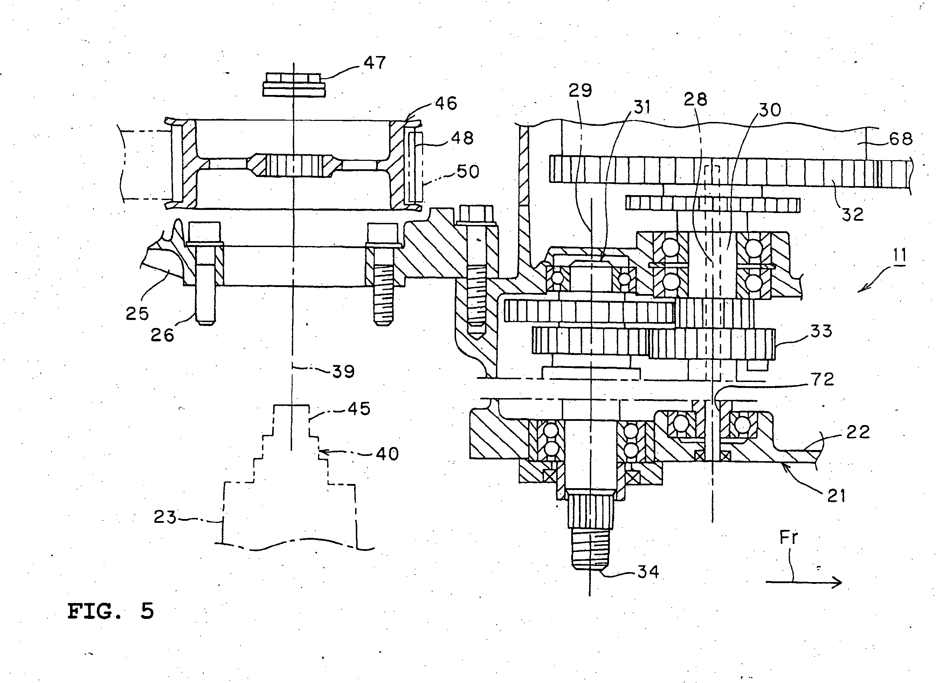

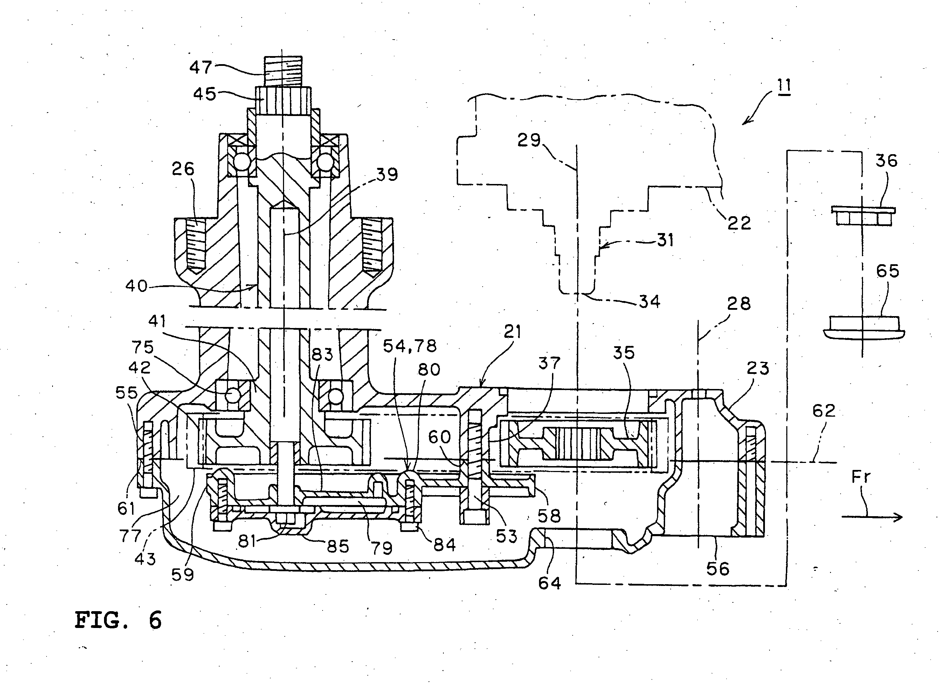

With reference to Figs. 5 and 6, an assembly work of the power transmission device 11 can be conducted by the following assembly method.

That is, first, in a first assembly process, the drive side transmission case 22 is assembled. Specifically, the input shaft 30, the drive shaft 31 and so forth are assembled with the drive side transmission case 22.

On the other hand, in a second assembly process, the endless member 43 is wound around the drive wheel 35 and the driven wheel 42. Afterwards, the drive wheel 35 and the portion of the endless member 43 that is wound around the drive wheel 35 are fitted into the recess 37. Next, the regulating member 54 is mounted onto the driven side transmission case 23 that journals the driven shaft 40 and the driven wheel 42 by the fastener 53. At this time, at least a portion of the drive wheel 35 is positioned so as to be interposed between the outside surface of the driven side transmission case 23 and the regulating member 54 in the axial direction of the drive shaft 31. Also, at least a portion of the endless member 43 is positioned so as to be interposed between the outside surface of the driven side transmission case 23 and the regulating member 54 in the axial direction of the drive shaft 31.

Thus, the driven side transmission case 23 and the regulating member 54 together regulate the drive wheel 35 and the portion of the endless member 43 that is wound around the drive wheel 35 concerning their respective movements in radial directions and in the axial direction of the drive shaft 31. That is, the drive wheel 35 is positioned at a predetermined location that is generally on the axis 29 of the drive shaft 31, and the drive wheel 35 and the endless member 43 are prevented from unintentionally dropping off from the predetermined location on the side of the driven side transmission case 23. As a result, the driven side transmission case 23, the drive wheel 35, the driven wheel 42, the endless member 43 and the regulating member 54 together form a unified "assembly body."

Next, in a third assembly process, the driven side transmission case 23 as the "assembly body" is mounted onto the drive side transmission case 22 by the fastener 24, the bracket 25 and the fastener 26. Also, the drive wheel 35 is mounted onto the one end 34 of the drive shaft 31 by means of a spline connection. Next, the drive wheel 35 is affixed to the one end 34 of the drive shaft 31 by the fastener 36. Thus, the assembly work of the "assembly body" to the drive side transmission case 22 completes. Next, the cover member 56 is mounted onto the driven side transmission case 23 by the fastener 55.

Next, in a fourth assembly process, the rear wheel 8 is interlockingly coupled with the other end 45 of the driven shaft 40 through the interlocking device 46. Afterwards, when the actuator 71 and the operating rod 73 are assembled with the aperture 72 and the cover member 56 by the fastener 70, the whole assembly work of the power transmission device 11 completes.

As thus described above, in the second assembly process, because the drive wheel 35 is prevented from unintentionally dropping off from the driven side transmission case 23 by the regulating member 54, the drive wheel 35 is easily mounted onto the one end 34 of the drive shaft 31 in the third assembly process. Thus, the assembly work of the power transmission device 11 can be more easily conducted, accordingly.

Also, as described above, the respective surfaces 60, 61 of the driven side transmission case 23 abutting on the regulating member 54 and the cover member 56 are defined in one hypothetical flat surface 62. Thus, when the respective surfaces 60, 61 of the driven side transmission case 23 abutting on the regulating member 54 and the cover member 56 are machined, the abutting surfaces 60, 61 are not individually formed but can be simultaneously formed in the machining process, and accordingly this shaping can be easily done. Further, only one side each of the regulating member 54 and the cover member 56 is required and is enough to abut on the respective surfaces 60, 61 of the driven side transmission case 23. Thus, the machining process can be more easily conducted in comparison with a case where both inside and outside surfaces of the regulating member 54 are machined. The shaping of the power transmission device 11 can be more easily conducted, accordingly.

Also, as described above, the endless member 43 wound around the drive wheel 35 and the driven wheel 42 is provided for power transmission, and the regulating member 54 is positioned to approach an outside surface of the endless member 43 from a location outward of the one end 34 of the drive shaft 31.

Thus, in the assembly method of the power transmission device 11, when the regulating member 54 is mounted onto the driven side transmission case 23, at least a portion of the drive wheel 35 and at least a portion of the endless member 43 are positioned so as to be interposed between the outside surface of the driven side transmission case 23 and the regulating member 54 in the axial direction of the drive shaft 31. In this manner, the drive wheel 35 is positioned at a predetermined location that is generally on the axis 29 of the drive shaft 31. In addition, the drive wheel 35 and the endless member 43 are prevented from unintentionally dropping off from the predetermined location on the side of the driven side transmission case 23.

The power transmission device 11 thus can be easily assembled in the process in which the drive wheel 35 is mounted onto the one end 34 of the drive shaft 31, which is the third assembly process, because no attention needs to be paid, not only to an incident that the drive wheel 35 can unintentionally drop off from its predetermined location on the side of the driven side transmission case 23, but also to another incident that occurs similarly to the endless member 43.

Also, as described above, the one portion 58 of the regulating member 54 opposing to the outside surface of the drive wheel 35 is disposed in the area surrounded by the annular endless member 43 in the view along the axis 29 of the drive shaft 31 (Fig. 3).

Therefore, the endless member 43 and the regulating member 54 are disposed in a compact manner with respect to each other, and the power transmission device 11 thus can be downsized.

Also, as described above, the oil pump 78 that supplies the lubricant 76 to the portion to be lubricated 75 is provided, and the oil pump 78 includes the pump case 80 unitarily formed with the regulating member 54 and having the pump chamber 79 therein, and the pump drive section 81 built in the pump chamber 79 and interlockingly coupled with the driven wheel 42 side.

In this regard, as described above, because the regulating member 54 is disposed to approach the outside surface of the drive wheel 35 in the axial direction of the drive shaft 31, the regulating member 54 is inevitably positioned to approach the driven wheel 42 in the axial direction of the drive shaft 31. Also, as described above, because the oil pump 78 is formed using the regulating member 54, the drive wheel 35, the driven wheel 42, the regulating member 54 and the oil pump 78 are disposed in a compact manner with respect to each other. The power transmission device 11 thus can be downsized. Also, as described above, the pump drive section 81 of the oil pump 78 is interlockingly coupled with the driven wheel 42 side. Because these components 42, 78 are disposed in a compact manner with respect to each other as described above, the construction in which the pump drive section 81 of the oil pump 78 is interlockingly coupled with the driven wheel 42 side also can be small.

Also, as described above, the pump case 80 has the pump case body 83 mounted onto the driven side transmission case 23 and the pump cover 85 detachably affixed to the pump case body 80, and the pump chamber 79 is formed between the pump case body 83 and the pump cover 85.

Therefore, when the pump drive section 81 is going to be under a maintenance or inspection work, the cover member 56 is removed from the driven side transmission case 23 by detaching the fastener 55 and then the pump cover 85 is removed from the pump case body 83 by detaching the fastener 84. These are only required to open the pump chamber 79. The work on the pump drive section 81 that is built in the pump chamber 79 can be easily done, accordingly.

The above description is made in accordance with the figures. However, the power transmission device 11 can be applied to vehicles such as watercrafts and for industrial machines. Also, the internal combustion engine 10 can include two stroke engines. Further, the drive wheel 35 and the driven wheel 42 can be gears that engage with each other. In this alternative, no endless member is necessary. In addition, the fastener 36 can be a bolt.

According to an idea, a power transmission device can be suggested providing a regulating member, which is positioned to approach an outside surface of the drive wheel from a location outward of the one end in an axial direction of the drive shaft to be mounted onto the driven side transmission case. The regulating member regulates an axial movement of the drive wheel relative to the driven side transmission case.

In such an improvement, the regulating member is mounted onto the driven side transmission case that journals the driven wheel in the second assembly process. At this time, the drive wheel is simply positioned so as to be interposed between the outside surface of the driven side transmission case and the regulating member in the axial direction of the drive shaft. In this manner, the drive wheel is positioned at a predetermined location that is generally on an axis of the drive shaft, and the drive wheel is prevented from unintentionally dropping off from the predetermined location on the side of the driven side transmission case.

Thus, the power transmission device can be easily assembled in the subsequent third assembly process, because no attention needs to be paid to an incident that the drive wheel can unintentionally drop off from its predetermined location on the side of the driven side transmission case.

On the other hand, in such a the power transmission device according to the described idea, if an inside surface of the above-mentioned regulating member abuts on the driven side transmission case, while the cover member abuts on an outside surface of the regulating member, such that these components are coupled with each other, the inside and outside surfaces of the regulating member that abut on the driven side transmission case and the cover member, respectively, need to be machined. Such machining, however, is troublesome and is likely to make the production of the power transmission device troublesome, accordingly.

As explained previously, the invention facilitates the assembly and formation of a power transmission device.

According to a preferred embodiment, a power transmission device including a drive shaft 31 journaled by a drive side transmission case 22 such that one end 34 of the drive shaft 31 extends beyond the drive side transmission case 22, a drive wheel 35 mounted onto the one end 34 of the drive shaft 31, a driven side transmission case 23 mounted onto the drive side transmission case 22, a driven wheel 42 journaled by the driven side transmission case 23 to be interlockingly coupled with the drive wheel 35, and a cover member 56 covering the one end 34 of the drive shaft 31, the drive wheel 35 and the driven wheel 42 from a location outside thereof to be mounted onto the driven side transmission case 23.

The power transmission device preferably comprises a regulating member 54 positioned to approach an outside surface of the drive wheel 35 from a location outward of the one end 34 in an axial direction of the drive shaft 31 to be mounted onto the driven side transmission case 23, the regulating member 54 regulates an axial movement of the drive wheel 35 relative to the driven side transmission case 23; the regulating member 54 and the cover member 56 are individually in surface abutment with the driven side transmission case 23; and respective surfaces 60, 61 of the driven side transmission case 23 abutting on the regulating member 54 and the cover member 56 are defined in one hypothetical flat surface 62.

Preferably, the power transmission device comprises an endless member 43 wound around the drive wheel 35 and the driven wheel 42 for power transmission, characterized in that the regulating member 43 is positioned to approach an outside surface of the endless member 43 from a location outward of the one end 34 in the axial direction of the drive shaft 31.

More preferably, a portion 58 of the regulating member 54 opposing to the outside surface of the drive wheel 35 is disposed in an area surrounded by the annular endless member 43 in a view along an axis 29 of the drive shaft 31 (Fig. 3).

Further, preferably an oil pump 78 is provided that supplies lubricant 76 to a portion to be lubricated 75, the oil pump 78 including a pump case 80 unitarily formed with the regulating member 54 and having a pump chamber 79 therein, and a pump drive section 81 built in the pump chamber 79 and interlockingly coupled with the side of the driven wheel 42.

Preferably, the pump case 80 includes a pump case body 83 mounted onto the driven side transmission case 23 and a pump cover 85 detachably affixed to the pump case body 83, and the pump chamber 79 is formed between the pump case body 83 and the pump cover 85.

As explained before, a method for assembling a power transmission device is provided comprising the steps of: mounting the regulating member 54 onto the driven side transmission case 23 that journals the driven wheel 42, wherein the drive wheel 35 is positioned so as to be interposed between the driven side transmission case 23 and the regulating member 54 in the axial direction of the drive shaft 31; next, mounting the driven side transmission case 23 onto the drive side transmission case 22, and mounting the drive wheel 35 onto the one end 34 of the drive shaft 31; and next, mounting the cover member 56 onto the driven side transmission case 23.

Moreover, a motorcycle is disclosed comprising the power transmission device 11 for transmitting power to a rear wheel 8 from an internal combustion engine 10 for generating power for traveling.

In this description, the reference numerals affixed to the respective component names do not lead the scope of the art of the present invention to the limitation that is defined by the text of the "embodiment" described.

Further effects of the invention are as follows.

In accordance with one aspect of the invention as recited, a power transmission device includes a drive shaft journaled by a drive side transmission case such that one end of the drive shaft extends beyond the drive side transmission case, a drive wheel mounted onto the one end of the drive shaft, a driven side transmission case mounted onto the drive side transmission case, a driven wheel journaled by the driven side transmission case to be interlockingly coupled with the drive wheel, and a cover member covering the one end of the drive shaft, the drive wheel and the driven wheel from a location outside thereof to be mounted onto the driven side transmission case, wherein the power transmission device comprises a regulating member positioned to approach an outside surface of the drive wheel from a location outward of the one end in an axial direction of the drive shaft to be mounted onto the driven side transmission case, the regulating member regulating an axial movement of the drive wheel relative to the driven side transmission case; the regulating member and the cover member are individually in surface abutment with the driven side transmission case; and respective surfaces of the driven side transmission case abutting on the regulating member and the cover member are defined in one hypothetical flat surface.

According to the above-mentioned power transmission device, the assembly work thereof can be conducted by the following assembly method.

That is, first, in a first assembly process, the drive side transmission case is assembled. Specifically, for example, the drive shaft is assembled with the drive side transmission case.

On the other hand, in a second assembly process, the regulating member is mounted onto the driven side transmission case that journals the driven wheel. At this time, the drive wheel is positioned so as to be interposed between the outside surface of the driven side transmission case and the regulating member in the axial direction of the drive shaft. In this manner, the drive wheel is positioned at the predetermined location that is generally on the axis of the drive shaft, and the drive wheel is prevented from unintentionally dropping off from the predetermined location on the side of the driven side transmission case. As a result, the driven side transmission case, the drive wheel, the driven wheel and the regulating member together form a unified "assembly body."

Next, in a third assembly process, when the driven side transmission case as the "assembly body" is mounted onto the drive side transmission case, and the drive wheel is mounted onto the one end of the drive shaft, the assembly work of the "assembly body" to the drive side transmission case completes. Next, when the cover member is mounted onto the driven side transmission case, the whole assembly work of the power transmission device completes.

In addition, as described above, in the second assembly process, because the drive wheel is prevented from unintentionally dropping off from the driven side transmission case by the regulating member, the drive wheel is easily mounted onto the one end of the drive shaft in the third assembly process. Thus, the assembly work of the power transmission device can be more easily conducted, accordingly.

Also, as described above, because the respective surfaces of the driven side transmission case abutting on the regulating member and the cover member are defined in one hypothetical flat surface, the abutting surfaces are not individually formed but can be simultaneously formed in a machining process, if this process is selected, and accordingly this shaping is easily done. Further, only one side each of the regulating member and the cover member is required and is enough to abut on the respective surfaces of the driven side transmission case. Thus, the machining process can be more easily conducted in comparison with a case where both inside and outside surfaces of the regulating member are machined. The shaping of the power transmission device can be more easily conducted, accordingly.

In accordance with a further aspect of the invention, the power transmission device comprises an endless member wound around the drive wheel and the driven wheel for power transmission, wherein the regulating member is positioned to approach an outside surface of the endless member from a location outward of the one end of the drive shaft.

Thus, in the assembly method of the power transmission device, when the regulating member is mounted onto the driven side transmission case, the drive wheel and the endless member are positioned so as to be interposed between the outside surface of the driven side transmission case and the regulating member in the axial direction of the drive shaft. In this manner, the drive wheel is positioned at a predetermined location that is generally on the axis of the drive shaft. In addition, the drive wheel and the endless member are prevented from unintentionally dropping off from the predetermined location on the side of the driven side transmission case.

The power transmission device thus can be easily assembled in the process in which the drive wheel is mounted onto the one end of the drive shaft, which is the third assembly process, because no attention needs to be paid, not only to an incident that the drive wheel can unintentionally drop off from its predetermined location on the side of the driven side transmission case, but also to another incident that occurs similarly to the endless member.

In accordance with a further aspect of the invention, a portion of the regulating member opposing to the outside surface of the drive wheel is disposed in an area surrounded by the annular endless member in a view along an axis of the drive shaft.

Therefore, the endless member and the regulating member are disposed in a compact manner with respect to each other, and the power transmission device thus can be downsized.

In accordance with a further aspect of the invention, the power transmission device comprises an oil pump that supplies lubricant to a portion to be lubricated, wherein the oil pump includes a pump case unitarily formed with the regulating member and having a pump chamber therein, and a pump drive section built in the pump chamber and interlockingly coupled with the driven wheel side.

In this regard, as described above, because the regulating member is disposed to approach the outside surface of the drive wheel in the axial direction of the drive shaft, the regulating member is inevitably positioned to approach the driven wheel in the axial direction of the drive shaft. Also, as described above, because the oil pump is formed using the regulating member, the drive wheel, the driven wheel, the regulating member and the oil pump are disposed in a compact manner with respect to each other. The power transmission device thus can be downsized. Also, as described above, the pump drive section of the oil pump is interlockingly coupled with the driven wheel side. Because these components are disposed in a compact manner with respect to each other as described above, the construction in which the pump drive section of the oil pump is interlockingly coupled with the driven wheel side also can be small.

In accordance with a still further aspect of the invention, the pump case includes a pump case body mounted onto the driven side transmission case and a pump cover detachably affixed to the pump case body, and the pump chamber is formed between the pump case body and the pump cover.

Therefore, when the pump drive section is going to be under a maintenance or inspection work, the cover member is removed from the driven side transmission case and then the pump cover is removed from the pump case body. These are only required to open the pump chamber. The work on the pump drive section that is built in the pump chamber can be easily done, accordingly.

Preferably, a method for assembling the power transmission device as described beforehand comprises the steps of: mounting the regulating member onto the driven side transmission case that journals the driven wheel, wherein the drive wheel is positioned so as to be interposed between the driven side transmission case and the regulating member in the axial direction of the drive shaft; next, mounting the driven side transmission case onto the drive side transmission case, and mounting the drive wheel onto the one end of the drive shaft; and next, mounting the cover member onto the driven side transmission case.

Thus, the same effects as those described above can be obtained.

In accordance with a further aspect of the invention, a machine, in particular a vehicle, preferably a motorcycle, comprises the power transmission device according to any described embodiment or aspect for transmitting power to a drive unit such as a rear wheel from a power unit such as an internal combustion engine for generating power for traveling.

Thus, a machine as a motorcycle can enjoy the whole effects in connection with the respective claims, i.e., the effects that the power transmission device can be more easily assembled, that the power transmission device can be more easily formed, and that the power transmission device can be small. Particularly, the effects are beneficial for motorcycles that require downsizing.

As mentioned before, in order to facilitate the assembly and formation of a power transmission device, a power transmission device 11 includes a drive shaft 31, one end 34 of which extends beyond a drive side transmission case 22, a drive wheel 35 mounted onto the one end 34 of the drive shaft 31, a driven wheel 42 journaled by a driven side transmission case 23 that is mounted onto the driven side transmission case 22, and a cover member 56 covering the one end 34 of the drive shaft 31, the drive wheel 35 and the driven wheel 42 from a location outside thereof to be mounted onto the driven side transmission case 23. The power transmission device 11 further includes a regulating member 54 that regulates a movement of the drive wheel 35 in an axial direction relative to the driven side transmission case 23. The regulating member 54 and the cover member 56 are individually in surface abutment with the driven side transmission case 23, and respective surfaces 60, 61 of the driven side transmission case 23 abutting on the regulating member 54 and the cover member 56 are defined in one hypothetical flat surface 62.

## Claims

1. Power transmission device for a straddle-type vehicle, preferably a motorcycle, including a drive shaft (31) journaled by a drive side transmission case (22) with one end (34) of the drive shaft (31) extending beyond the drive side transmission case (22), a drive wheel (35) mounted onto the one end (34) of the drive shaft (31), a driven side transmission case (23) mounted onto the drive side transmission case (22),
wherein a regulating member (54) is positioned to approach an outside surface of the drive wheel (35) from a location outward of the one end (34) in an axial direction of the drive shaft (31),
wherein the regulating member (54) prevents the drive wheel (35) from dropping off the drive shaft (39) when a fastener (36) for affixing the drive wheel (35) to the one end (34) of the drive shaft (31) is not yet installed,
**characterized in that**
the regulating member (54) is mounted onto the driven side transmission case (23),
the regulating member (54) and a cover member (56) are individually in surface abutment with the driven side transmission case (23), and
respective surfaces (60,61) of the driven side transmission case (23) abutting on the regulating member (54) and the cover member (56) are defined in one theoretical flat plane or surface (62).

2. Power transmission device according to claim 1, **characterized by** further comprising a driven wheel (42) journaled by the driven side transmission case (23) to be interlockingly coupled with the drive wheel (35).

3. Power transmission device according to claim 1 or 2, **characterized in that** the cover member (56) covers the one end (34) of the drive shaft (31), the drive wheel (35), and/or the driven wheel (42) from a location outside thereof, the cover member (56) being mounted onto the driven side transmission case (23).

4. Power transmission device according to claim 2 or 3, **characterized by** comprising an endless member (43) wound around the drive wheel (35) and the driven wheel (42) for power transmission therebetween, wherein the regulating member (43) is preferably positioned to approach an outside surface of the endless member (43) from a location outward of the one end (34) in the axial direction of the drive shaft (31).

5. Power transmission device according to claim 4, **characterized in that** a portion (58) of the regulating member (54) opposing to an outside surface of the drive wheel (35) is disposed in an area surrounded by the annular endless member (43) in a view along an axis (29) of the drive shaft (31).

6. Power transmission device according to at least one of the claims 2 to 5, **characterized by** comprising an oil pump (78) configured to supply a lubricant (76) to a portion to be lubricated (75), wherein preferably the oil pump (78) includes a pump case (80), at least part thereof being unitarily formed with the regulating member (54) and having a pump chamber (79) therein, and a pump drive section (81) positioned in the pump chamber (79) and interlockingly coupled with the side of the driven wheel (42).

7. Power transmission device according to claim 6, **characterized in that** the pump case (80) includes a pump case body (83) preferably being mounted onto the driven side transmission case (23) and a pump cover (85) detachably affixed to the pump case body (83), and the pump chamber (79) is formed between the pump case body (83) and the pump cover (85).

8. Straddle-type vehicle, in particular a motorcycle, comprising a power transmission device (11) for transmitting a drive power from a power source, in particular being an internal combustion engine (10), to a driving device, in particular being a rear wheel (8), **characterized in that** the power transmission device (11) is configured according to at least one of the claims 1 to 7.

9. Method for assembling the power transmission device according to claim 2 or one of the claims 3 to 7 in the version of being dependent on claim 2, comprising:
a first step wherein the drive side transmission case (23) is assembled including the drive shaft (31),
a second step of mounting the regulating member (54) onto the driven side transmission case (23) that journals the driven wheel (42), wherein the drive wheel (35) is positioned so as to be interposed between the driven side transmission case (23) and the regulating member (54) in an axial direction of the drive shaft (31) of the drive wheel (35);
a third step of mounting the driven side transmission case (23) onto the drive side transmission case (22), and mounting the drive wheel (35) onto the one end (34) of the drive shaft (31); and
mounting the cover member (56) onto the driven side transmission case (23).

10. Method according to claim 9, **characterized by** a further step of assembling the power transmission means to a frame of a machine, in particular a straddle-type vehicle, such as preferably a motorcycle.

## Patentansprüche

1. Kraftübertragungsvorrichtung für ein Spreizsitz-Fahrzeug, vorzugsweise ein Motorrad, die eine Antriebswelle (31), die über ein Antriebsseiten-Getriebegehäuse (22) gelagert ist, wobei sich ein Ende (34) der Antriebswelle (31) über das Antriebsseiten-Getriebegehäuse (22) hinaus erstreckt, ein antreibendes Rad (35), das an dem einen Ende (34) der Antriebswelle (31) angebracht ist, und ein Abtriebsseiten-Getriebegehäuse (23),enthält, das an dem Antriebsseiten-Getriebegehäuse (22) angebracht ist,
wobei ein Regulierelement (54) so positioniert ist, dass es sich einer Außenfläche des Antriebsrades (35) von einer Position außerhalb des einen Endes (34) in einer axialen Richtung der Antriebswelle (31) nähert,
und das Regulierelement (54) verhindert, dass das antreibende Rad (35) von der Antriebswelle (39) abfällt, wenn ein Befestigungselement (36) zum Befestigen des antreibenden Rades (35) an dem einen Ende (34) der Antriebswelle (31) noch nicht installiert ist,
**dadurch gekennzeichnet, dass**
das Regulierelement (54) an dem Abtriebsseiten-Getriebegehäuse (23) angebracht ist, das Regulierelement (54) und ein Abdeckungselement (56) einzeln in Flächenkontakt mit dem Abtriebsseiten-Getriebegehäuse (23) sind, und
jeweilige Flächen (60, 61) des Abtriebsseiten-Getriebegehäuses (23), die an dem Regulierelement (54) und dem Abdeckungselement (56) anliegen, in einer theoretischen planen Ebene oder Fläche (62) definiert sind.

2. Kraftübertragungsvorrichtung nach Anspruch 1, **dadurch gekennzeichnet, dass** sie des Weiteren ein angetriebenes Rad (42) umfasst, das über das Abtriebsseiten-Getriebegehäuse (23) so gelagert ist, dass es eingreifend mit dem antreibenden Rad (35) gekoppelt ist.

3. Kraftübertragungsvorrichtung nach Anspruch 1 oder 2, **dadurch gekennzeichnet, dass** das Abdeckungselement (56) das eine Ende (34) der Antriebswelle (31), das antreibende Rad (35) und/oder das angetriebene Rad (42) von einer Position außerhalb derselben abdeckt, wobei das Abdeckungselement (56) an dem Abtriebsseiten-Getriebegehäuse (23) angebracht ist.

4. Kraftübertragungsvorrichtung nach Anspruch 2 oder 3, **dadurch gekennzeichnet, dass** sie ein Endlos-Element (43) umfasst, das um das antreibende Rad (35) und das angetriebene Rad (42) zur Kraftübertragung zwischen ihnen gewickelt ist, wobei das Regulierelement (43) vorzugsweise so positioniert ist, dass es sich einer Außenfläche des Endlos-Elementes (43) von einer Position außerhalb des einen Endes (34) in der axialen Richtung der Antriebswelle (31) nähert.

5. Kraftübertragungsvorrichtung nach Anspruch 4, **dadurch gekennzeichnet, dass** ein Abschnitt (58) des Regulierelementes (54), der einer Außenfläche des antreibenden Rades (35) gegenüberliegt, in einem Bereich angeordnet ist, der, entlang einer Achse (29) der Antriebswelle (31) gesehen, von dem ringförmigen Endlos-Element (43) umschlossen ist.

6. Kraftübertragungsvorrichtung nach wenigstens einem der Ansprüche 2 bis 5, **dadurch gekennzeichnet, dass** sie eine Ölpumpe (78) umfasst, die so eingerichtet ist, dass sie einem zu schmierenden Abschnitt (75) ein Schmiermittel (76) zuführt, wobei die Ölpumpe (78) vorzugsweise ein Pumpengehäuse (80) enthält und wenigstens ein Teil desselben aus einem Stück mit dem Regulierelement (54) ausgebildet ist und eine Pumpenkammer (79) darin aufweist, sowie einen Pumpenantriebs-Teilabschnitt (81), der in der Pumpenkammer (79) angeordnet ist und eingreifend mit der Seite des angetriebenen Rades (42) gekoppelt ist.

7. Kraftübertragungsvorrichtung nach Anspruch 6, **dadurch gekennzeichnet, dass** das Pumpengehäuse (80) einen Pumpengehäuse-Körper (83), der vorzugsweise an dem Abtriebsseiten-Getriebegehäuse (23) angebracht ist, sowie eine Pumpenabdeckung (85) enthält, die abnehmbar an dem Pumpengehäuse-Körper (83) befestigt ist, und die Pumpenkammer (79) zwischen dem Pumpengehäuse-Körper (83) und der Pumpenabdeckung (85) ausgebildet ist.

8. Spreizsitz-Fahrzeug, insbesondere ein Motorrad, das eine Kraftübertragungsvorrichtung (11) zum Übertragen einer Antriebskraft von einer Kraftquelle, die insbesondere ein Verbrennungsmotor (10) ist, zu einer antreibenden Vorrichtung umfasst, die insbesondere ein Hinterrad (8) ist, **dadurch gekennzeichnet, dass** die Kraftübertragungsvorrichtung (11) gemäß einem der Ansprüche 1 bis 7 aufgebaut ist.

9. Verfahren zum Installieren der Kraftübertragungsvorrichtung nach Anspruch 2 oder einem der Ansprüche 1 bis 7, in der von Anspruch 2 abhängigen Version, wobei es umfasst:
einen ersten Schritt, in dem das Antriebsseiten-Getriebegehäuse (23) einschließlich der Antriebswelle (31) installiert wird,
einen zweiten Schritt des Anbringens des Regulierelementes (54) an dem Abtriebsseiten-Getriebegehäuse (23), an dem das angetriebene Rad (42) gelagert ist, wobei das antreibende Rad (35) so positioniert ist, dass es sich in einer axialen Richtung der Antriebswelle (31) des Antriebsrades (35) zwischen dem Abtriebsseiten-Getriebegehäuse (23) und dem Regulierelement (54) befindet;
einen dritten Schritt des Anbringens des Abtriebsseiten-Getriebegehäuses (23) an dem Antriebsseiten-Getriebegehäuse (22) und des Anbringens des antreibenden Rades (35) an dem einen Ende (34) der Antriebswelle (31); und
Anbringen des Abdeckungselementes (56) an dem Abtriebsseiten-Getriebegehäuse (23).

10. Verfahren nach Anspruch 9, **gekennzeichnet durch** einen weiteren Schritt des Installierens der Kraftübertragungseinrichtung an einem Rahmen einer Maschine, insbesondere eines Spreizsitz-Fahrzeugs, wie z.B. vorzugsweise eines Motorrades.

## Revendications

1. Dispositif de transmission de puissance pour un véhicule de type monté à califourchon, de préférence une motocyclette, comprenant un arbre d'entrainement (31) tourillonné par un carter de transmission côté entrainement (22) avec une première extrémité (34) de l'arbre d'entrainement (31) s'étendant au-delà du carter de transmission côté entrainement (22), une roue motrice (35) montée sur la une première extrémité (34) de l'arbre d'entrainement (31), un carter de transmission côté entrainé (23) monté sur le carter de transmission côté entrainement (22),
- dans lequel un élément régulateur (54) est positionné pour approcher une surface extérieure de la roue motrice (35) à partir d'une position à l'extérieur de la première extrémité (34) dans une direction axiale de l'arbre d'entrainement (31),
- dans lequel l'élément régulateur (54) empêche la roue motrice (35) de s'échapper de l'arbre d'entrainement (39) lorsqu'un dispositif de fixation (36) pour fixer la roue motrice (35) à la première extrémité (34) de l'arbre d'entrainement (31) n'est pas encore installé,
- **caractérisé en ce que** :
- l'élément régulateur (54) est monté sur le carter de transmission côté entrainé (23) ;
- l'élément régulateur (54) et un élément de couverture (56) sont individuellement en butée de surface avec le carter de transmission côté entrainé (23) ; et
- des surfaces respectives (60, 61) du carter de transmission côté entrainé (23) en butée sur l'élément régulateur (54) et l'élément de couverture (56) sont définies dans un plan ou une surface plate théorique (62).

2. Dispositif de transmission de puissance selon la revendication 1, caractérisé en qu'il comprend en outre une roue entrainée (42) tourillonnée par le carter de transmission côté entrainé (23) pour être couplée de manière inter-verrouillée avec la roue motrice (35).

3. Dispositif de transmission de puissance selon les revendications 1 ou 2, caractérisé en que l'élément de couverture (56) couvre la première extrémité (34) de l'arbre d'entrainement (31), la roue motrice (35) et/ou la roue entrainée (42) à partir d'une position extérieure à celles-ci, l'élément de couverture (56) étant monté sur le carter de transmission côté entrainé (23).

4. Dispositif de transmission de puissance selon les revendications 2 ou 3, caractérisé en qu'il comprend un élément sans fin (45) enroulé autour de la roue motrice (35) et la roue entrainée (42) pour une transmission de puissance entre celles-ci, dans lequel l'élément régulateur (43) est de préférence positionné pour approcher une surface extérieure de l'élément sans fin (43) à partir d'une position à l'extérieur de la première extrémité (34) dans la direction axiale de l'arbre d'entrainement (31).

5. Dispositif de transmission de puissance selon la revendication 4, caractérisé en qu'une partie (58) de l'élément régulateur (54) opposée à une surface extérieure de la roue motrice (35) est disposée dans une région entourée par l'élément sans fin annulaire (43) sur une vue suivant un axe (29) de l'arbre d'entrainement (31).

6. Dispositif de transmission de puissance selon au moins une des revendications 2 à 5, caractérisé en qu'il comprend une pompe à huile (78) configurée pour délivrer un lubrifiant (76) à une partie à lubrifier (75), dans lequel de préférence la pompe à huile (78) comprend une enveloppe de pompe (80), au moins une partie de celle-ci étant unitairement formée avec l'élément régulateur (54) et comportant une chambre de pompe (79) à l'intérieur de celle-ci et une section d'entrainement de pompe (81) positionnée dans la chambre de pompe (79) et couplée de manière inter-verrouillée avec le côté de la roue entrainée (42).

7. Dispositif de transmission de puissance selon la revendication 6, caractérisé en que l'enveloppe de pompe (80) comprend un corps d'enveloppe de pompe (83) de préférence monté sur le carter de transmission côté entrainé (23) et une couverture de pompe (85) fixée de manière amovible au corps d'enveloppe de pompe (83) et la chambre de pompe (79) est formée entre le corps d'enveloppe de pompe (83) et la couverture de pompe (85).

8. Véhicule de type monté à califourchon, de préférence une motocyclette, comprenant un dispositif de transmission de puissance (11) pour transmettre une puissance d'entrainement à partir d'une source de puissance, en particulier un moteur à combustion interne (10), à un dispositif d'entrainement, en particulier une roue arrière (8), **caractérisé en ce que** le dispositif de transmission de puissance (11) est configuré selon au moins une des revendications 1 à 7.

9. Procédé pour assembler le dispositif de transmission de puissance selon la revendication 2 ou une des revendications 3 à 7, dans la version dépendant de la revendication 2, comprenant :
- une première étape dans laquelle un carter de transmission côté entrainement (23) est assemblé y compris l'arbre d'entrainement (31) ;
- une deuxième étape de montage de l'élément régulateur (54) sur le carter de transmission côté entrainé (23) tourillonnant la roue entrainée (42), pour lequel la roue motrice (35) est positionnée de manière à être interposée entre le carter de transmission côté entrainé (23) et l'élément régulateur (54) dans une direction axiale d l'arbre d'entrainement (31) de la roue motrice (35) ;
- une troisième étape de montage du carter de transmission côté entrainé (23) sur le carter de transmission côté entrainement (22) et de montage de la roue motrice (35) sur une première extrémité (34) de l'arbre d'entrainement (31) ; et
- le montage de l'élément de couverture (56) sur le carter de transmission côté entrainé (23).

10. Procédé selon la revendication 9, **caractérisé par** une étape additionnelle d'assemblage des moyens de transmission de puissance à un cadre d'une machine, en particulier un véhicule de type monté à califourchon, tel que, de préférence, une motocyclette.
